# EUROPEAN PATENT APPLICATION

(11) **EP 4 431 453 A1**
(43) Date of publication of application: **18.09.2024**
(21) Application number: 23752241.2
(22) Date of filing: 18.01.2023
(51) Int. Cl.: C01B 32/55

(54) **DRY ICE MAKING DEVICE, AND EXHAUST STRUCTURE AND EXHAUST METHOD OF DRY ICE MAKING DEVICE**

(30) Priority: 10.02.2022 CN 202220273869 U; 23.03.2022 CN 202210288202
(71) Applicant: Xiamen Jin Rui Yi Industrial&trading Co., Ltd., Xiamen, Fujian 361000 (CN)
(72) Inventor: LIN, Qi, Xiamen, Fujian 361000 (CN); SHI, Tongying, Xiamen, Fujian 361000 (CN)
(74) Representative: Verscht, Thomas Kurt Albert
(86) International application number: PCT/CN2023/072777
(87) International publication number: WO 2023/151461

(57) **Abstract**

A dry ice making device, comprising: an ice making cavity (1),an ice spraying valve (2), an exhaust valve (3) and a liquid inlet pipe (4). The ice spraying valve (2) is provided at the tail end of the liquid inlet pipe (4) and is used for opening a liquid outlet (5) to spray liquid carbon dioxide to the ice making cavity (1); and the exhaust valve (3) is arranged between a gas outlet (6) and the liquid outlet (5) and is used for making the liquid outlet (5) lead to external air through the gas outlet (6). The dry ice making device additionally discharges gas by means of the liquid outlet (5), so that carbon dioxide gas remaining in the cavity during a dry ice making process can be discharged.

## Description

### FIELD OF THE DISCLOSURE

The present disclosure relates to production equipment for forming dry ice, and in particular relates to an air exhaust device for dry ice preparation process.

### BACKGROUND OF THE DISCLOSURE

The existing method for preparing dry ice is as follows: decompressing liquid carbon dioxide from a storage tank through a pipeline and an electromagnetic valve to enter into a dry ice compression chamber so as to be compressed into blocks, a switch of the electromagnetic valve is set according to a compression time of a mold, on-off duration of the electromagnetic valve is controlled by PLC, a large amount of carbon dioxide gas will therefore be not completely separated from the dry ice and remain in the mold, resulting in irregular exhaustion of the carbon dioxide gas on site, resulting in huge waste of cooling capacity, and resulting in a low conversion rate of the dry ice for decompressing the liquid carbon dioxide to normal pressure.

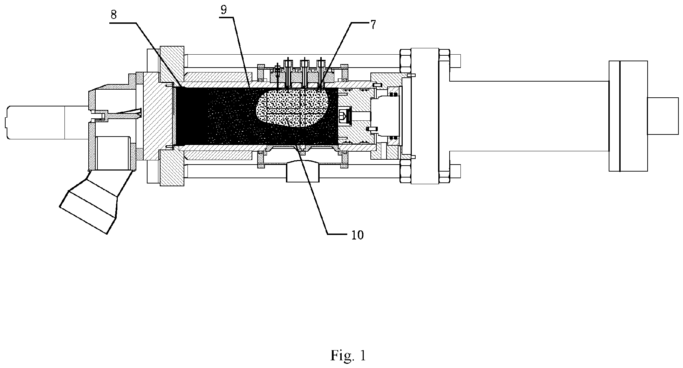

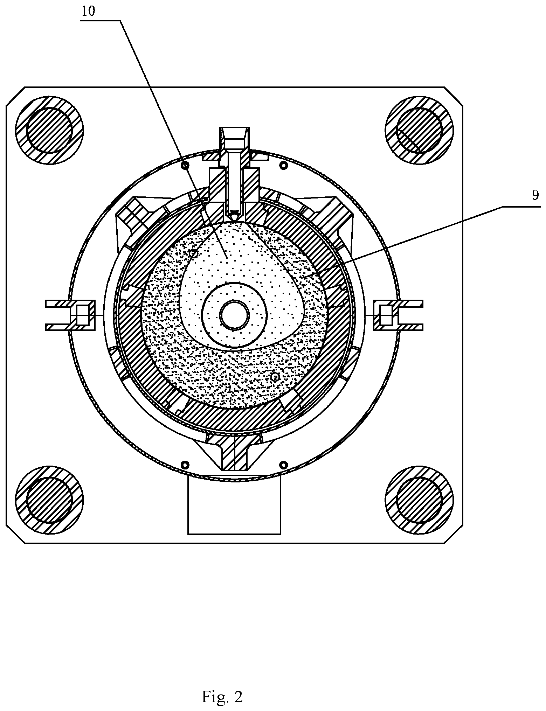

Referring to Figs. 1 and 2, in a dry ice preparation device in the existing techniques, in order to exhaust residual carbon dioxide gas, an outer wall of an ice preparation cavity comprises a window 7, the window 7 is then filled with low-density materials, and pores of the low-density materials are used to exhaust carbon dioxide gas. However, during a dry ice preparation process, some of carbon dioxide particles in the ice preparation cavity are finally compressed to form dry ice blocks 8 in the cavity, a large amount of the carbon dioxide particles 9 are still attached to the pores of the low-density materials in the window 7, the pores of the low-density materials are therefore blocked, so that the carbon dioxide gas 10 cannot be normally exhausted, resulting in an air explosion phenomenon when the dry ice is formed by compressing in the cavity, in order to prevent this phenomenon, a cavity for forming dry ice therefore cannot be designed to be large, so that dry ice blocks with a larger size cannot be prepared.

### BRIEF SUMMARY OF THE DISCLOSURE

The technical problem to be solved by the present disclosure is to provide a dry ice preparation device, and an air exhaust structure and an air exhaust method for dry ice preparation, and carbon dioxide gas blocked in a cavity during a dry ice preparation process can be exhausted.

A design idea of the present disclosure is to further provide an air flow passage in a dry ice forming cavity, the passage is a dry ice injection passage, a liquid outlet port is converted into a gas exhaust passage after dry ice injection is complete, and when dry ice is prepared in an ice preparation cavity, residual carbon dioxide gas is exhausted through the liquid outlet port.

The present disclosure provides an air exhaust method for a dry ice preparation device comprising the follow steps.
1) enabling a liquid outlet port to be in communication with a liquid inlet pipeline, and ejecting liquid carbon dioxide into an ice preparation cavity through the liquid outlet port during ice preparation; and
2) blocking the liquid outlet port from the liquid inlet pipeline, and enabling the liquid outlet port to be in communication with external air when the ice preparation is complete.

In order to solve the above-mentioned technical problems, the present disclosure provides a dry ice preparation device, which comprises an ice preparation cavity, one or more ice injection valves, an air exhaust valve and a liquid inlet pipeline, the one or more ice injection valves are disposed on a distal end of the liquid inlet pipeline and are configured to eject liquid carbon dioxide into the ice preparation cavity by turning on a liquid outlet port;

The air exhaust valve is disposed between an air exhaust port and the liquid outlet port to enable the liquid outlet port to be in communication with external air through the air exhaust port.

In a preferred embodiment, the one or more ice injection valves are at least one.

In a preferred embodiment, the one or more ice injection valves and the air exhaust valve are connected to the liquid inlet pipeline through a three-way pipe.

In a preferred embodiment, a first inlet of the three-way pipe is connected to the liquid inlet pipeline, and a second inlet is connected to the air exhaust valve; an outlet of the three-way pipe is the liquid outlet port; and the one or more ice injection valves are disposed between the first inlet and the liquid outlet port.

In a preferred embodiment, the one or more ice injection valves enable the first inlet to be in communication with the liquid outlet port during ice preparation.

In a preferred embodiment, the one or more ice injection valves enable the first inlet to be blocked from the liquid outlet port, and the air exhaust valve enables the liquid outlet port to be in communication with the air exhaust port when the ice preparation is complete.

The present disclosure further provides an air exhaust structure for a dry ice preparation device, and a liquid outlet port for ejecting liquid carbon dioxide is in communication with external air through an air exhaust valve.

In a preferred embodiment, the liquid outlet port and the air exhaust valve are connected to the liquid inlet pipeline through a three-way pipe.

In a preferred embodiment, a first inlet of the three-way pipe is connected to the liquid inlet pipeline, and a second inlet is connected to the air exhaust valve; an outlet of the three-way pipe is the liquid outlet port; and the one or more ice injection valves are disposed between the first inlet and the liquid outlet port.

Compared with the existing techniques, the technical solution of the present disclosure has the following advantages.

The present disclosure provides the dry ice preparation device, and the air exhaust structure and the air exhaust method of the dry ice preparation device, the air exhaust valve and an air exhaust passage are added, the liquid outlet port is in communication with external air by turning on the air exhaust valve after the dry ice preparation is complete, so that residual high-pressure carbon dioxide gas in the ice preparation cavity caused by an exhaust window being blocked by the carbon dioxide particles can be in communication with external air to exhaust the residual gas. This method uses the liquid outlet port as an inlet of the air exhaust passage, the liquid outlet port is used to eject the liquid carbon dioxide during the ice preparation, no new dry ice particles are produced after the liquid carbon dioxide is turned off, so that the liquid outlet port will not be blocked; therefore, using the liquid outlet port as the inlet of the air exhaust passage can ensure that the air exhaust passage will not be blocked.

### BRIEF DESCRIPTION OF THE DRAWINGS

Fig. 1 illustrates a diagrammatic view of a dry ice preparation device in the existing techniques.
Fig. 2 illustrates a diagrammatic view of the dry ice preparation device in the existing techniques at another angle.
Fig. 3 illustrates a front view of a preferred embodiment of the present disclosure.
Fig. 4 illustrates a side view of the preferred embodiment of the present disclosure.
Fig. 5 illustrates is a connection diagrammatic view of a three-way pipe of the preferred embodiment of the present disclosure.

### DETAILED DESCRIPTION OF THE EMBODIMENTS

The technical solutions in the embodiments of the present disclosure will be clearly and completely described below in combination with the accompanying drawings in the embodiments of the present disclosure; it is obvious that the described embodiments are merely some embodiments of the present disclosure instead of all embodiments, and it is intended that all other embodiments fall within the protective scope of the present disclosure provided that they are made by technical person skilled in the art based on the embodiments of the present disclosure without creative works.

In the description of the present disclosure, it should be noted that an orientation or a positional relationship represented by terms, such as "upper", "lower", "inner", "outer", "top/bottom", are based on the orientation or the positional relationship shown in the drawings, it is merely used to easily describe the present disclosure and simplify the description instead of indicating or implying that a referred device or element should have a specified orientation or be constructed and operated in a specified orientation, and it should not be understood as a limitation of the present disclosure. In addition, terms "first" and "second" are merely used for description purposes and should not be understood to indicate or imply relative importance.

In the description of the present disclosure, unless otherwise expressly required and limited, it should be noted that terms, such as "installed", "disposed", "sleeved/socketed", "connected", should develop broad understanding, for example, "connected" can be a wall-mountable connection, a detachable connection, or an integrated connection, a mechanical connection, an electrical connection, a direct connection, an indirect connection through an intermediator, or communication between inner portions of two members, for technical person skilled in the art, specific meaning of the terms in the present disclosure can be understood under specific conditions.

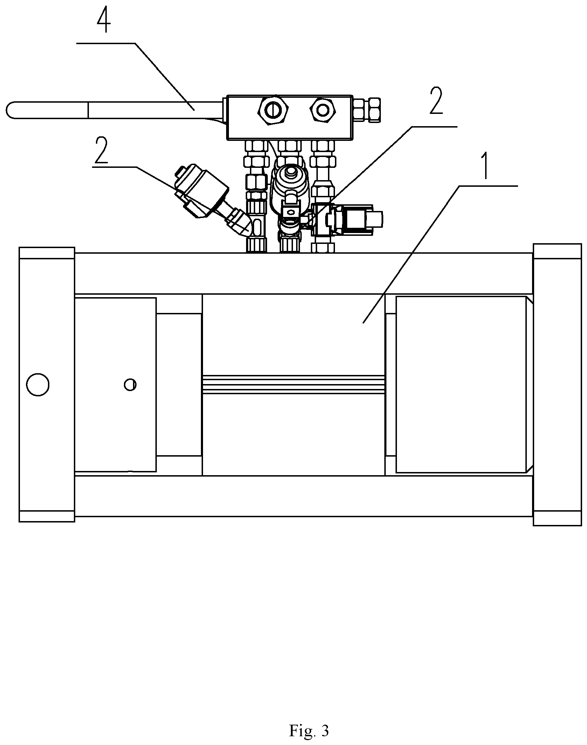

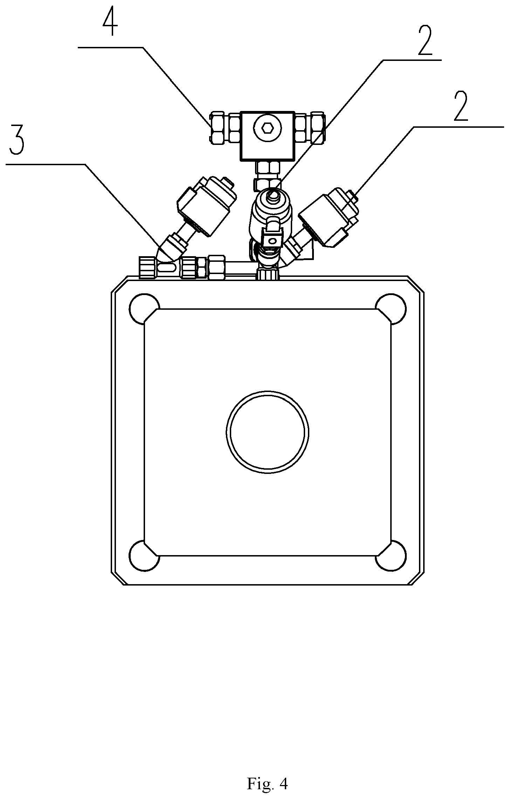

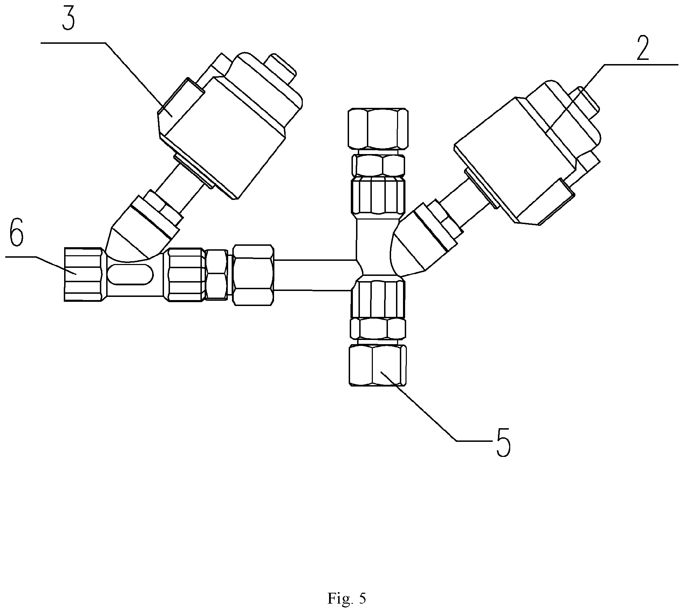

Referring to Figs. 3-5, this embodiment provides a dry ice preparation device, which comprises an ice preparation cavity 1, two ice injection valves 2, an air exhaust valve 3 and a liquid inlet pipeline 4; the ice injection valves 2 are disposed on a distal end of the liquid inlet pipeline 4 and are configured to inject liquid carbon dioxide into the ice preparation cavity 1 by turning on a liquid outlet port 5.

The air exhaust valve 3 is disposed between an air exhaust port 6 and the liquid outlet port 5 to enable the liquid outlet port 5 to be in communication with external air through the air exhaust port 6.

In the dry ice preparation device, the air exhaust valve 3 is further added, residual high-pressure carbon dioxide gas in the ice preparation cavity 1 can be in communication with the external air by turning on the air exhaust valve 3 after dry ice preparation is complete, and the residual gas is therefore exhausted.

It should be noted that a number of the ice injection valves 2 can be any number and is not limited to be two in this embodiment.

In order to achieve the above-mentioned pipeline arrangement, the ice injection valves 2 and the air exhaust valve 3 are connected to the liquid inlet pipeline 4 through a three-way pipe. Specifically, a first inlet of the three-way pipe is connected to the liquid inlet pipeline 4, and a second inlet is connected to the air exhaust valve 3; and an outlet of the three-way pipe is the liquid outlet port 5; and the ice injection valves 2 are disposed between the first inlet and the liquid outlet port 5.

The ice preparation cavity 1 of the present disclosure is an existing technology. As shown in Figs. 1 and 2, an outer wall of the cavity 1 comprises a window 7, the window 7 is filled with a grid or the window 7 is filled with low-density materials, and pores of the low-density materials or clearance of the grid are used to exhaust the carbon dioxide gas.

In ice preparation, the first inlet is in communication with the liquid outlet port 5 through the ice injection valves 2. The liquid carbon dioxide flowing out of the liquid inlet pipeline 4 can be ejected from the liquid outlet port 5 to achieve a normal ice preparation process, dry ice particles and the carbon dioxide gas are generated in the ice preparation cavity 1, the carbon dioxide gas can pass through the window 7 of the ice preparation cavity 1 initially, the dry ice particles will gradually block an air exhaust passage of the gird or the pores of the window 7, and the carbon dioxide gas will be retained in the cavity 1. When the ice preparation is complete, the first inlet is blocked from the liquid outlet port 5 by the ice injection valves 2 to stop ejecting the liquid carbon dioxide, and the air exhaust valve 3 is turned on to enable the liquid outlet port 5 to be in communication with the air exhaust port 6 through the air exhaust valve 3. In this way, during a forming process in which the dry ice are compressed by a piston in the ice preparation cavity 1, high-pressure carbon dioxide gas 10 will be exhausted from the air exhaust port 6. This air exhaust structure utilizes the liquid outlet port 5 as an inlet of air exhaust passage, since the liquid outlet port 5 is always ejecting the liquid carbon dioxide during the ice preparation process, the liquid outlet port 5 will not be blocked by the dry ice particles. After ejection of the liquid carbon dioxide is stopped, the liquid outlet port 5 is used as the inlet of the air exhaust passage to ensure that the air exhaust passage will not be blocked.

An air exhaust method for dry ice preparation comprises the following steps:
1) enabling a liquid outlet port 5 to be in communication with the liquid inlet pipeline 4, and ejecting liquid carbon dioxide into an ice preparation cavity 1 through the liquid outlet port 5; forming into particles using a part of the liquid carbon dioxide, and exhausting a part of gasified carbon dioxide from the window 7 of the cavity during ice preparation;
2) blocking the liquid outlet port 5 from the liquid inlet pipeline 4, and enabling the liquid outlet port 5 to be in communication with external air when the ice preparation process is complete; and
3) pushing a piston in the cavity to compress solid carbon dioxide to form a shape, and discharging the carbon dioxide gas in the cavity from the liquid outlet port.

The aforementioned embodiments are merely some embodiments of the present disclosure, and the conception of the disclosure is not limited thereto, it is intended that any non-substantive modifications of the present disclosure fall within the protective scope of the present disclosure provided they are made based on the conception without departing the present disclosure by any technical person skilled in the art.

### INDUSTROAL APPLICABILITY

The present disclosure discloses a dry ice preparation device, which comprises an ice preparation cavity, one or more ice injection valves, an air exhaust valve and a liquid inlet pipeline, the one or more ice injection valves are disposed on a distal end of the liquid inlet pipeline and are configured to eject liquid carbon dioxide into the ice preparation cavity by turning on a liquid outlet port; the air exhaust valve is disposed between an air exhaust port and the liquid outlet port to enable the liquid outlet port to be in communication with external air through the air exhaust port. The dry ice preparation device further comprises air exhaust from the liquid outlet port, the residual carbon dioxide gas in the cavity during the dry ice preparation can be exhausted, an industrial applicability is good.

## Claims

1. A dry ice preparation device, **characterized in that**, it comprises an ice preparation cavity, one or more ice injection valves, an air exhaust valve and a liquid inlet pipeline; the one or more ice injection valves are disposed on a distal end of the liquid inlet pipeline and are configured to eject liquid carbon dioxide into the ice preparation cavity by turning on a liquid outlet port; and the air exhaust valve is disposed between an air exhaust port and the liquid outlet port to enable the liquid outlet port to be in communication with external air through the air exhaust port.

2. The dry ice preparation device according to claim 1, **characterized in that**: the one or more ice injection valves are at least one.

3. The dry ice preparation device according to claim 1, **characterized in that**: the one or more ice injection valves and the air exhaust valve are connected to the liquid inlet pipeline through a three-way pipe.

4. The dry ice preparation device according to claim 3, **characterized in that**: a first inlet of the three-way pipe is connected to the liquid inlet pipeline, and a second inlet is connected to the air exhaust valve; an outlet of the three-way pipe is the liquid outlet port; and the one or more ice injection valves are disposed between the first inlet and the liquid outlet port.

5. The dry ice preparation device according to claim 1 or 4, **characterized in that**: an outer wall of the ice preparation cavity comprises a window, the window is filled with low-density materials, and the low-density materials comprise pores.

6. The dry ice preparation device according to claim 1 or 4, **characterized in that**: an outer wall of the ice preparation cavity comprises a window, and the window comprises a grid.

7. An air exhaust structure for dry ice preparation, **characterized in that**: a liquid outlet port for ejecting liquid carbon dioxide is in communication with external air through an air exhaust valve.

8. The air exhaust structure for the dry ice preparation according to claim 7, **characterized in that**, it comprises an ice preparation cavity, one or more ice injection valves and a liquid inlet pipeline; the one or more ice injection valves are disposed on the liquid inlet pipeline; the liquid inlet pipeline is further connected to an air exhaust port, and the air exhaust valve is disposed between the air exhaust port and the liquid outlet port.

9. The air exhaust structure for the dry ice preparation according to claim 8, **characterized in that**: the liquid outlet port and the air exhaust valve are connected to the liquid inlet pipeline through a three-way pipe.

10. The air exhaust structure for the dry ice preparation according to claim 9, **characterized in that**: a first inlet of the three-way pipe is connected to the liquid inlet pipeline, and a second inlet is connected to the air exhaust valve; an outlet of the three-way pipe is the liquid outlet port; and the one or more ice injection valves are disposed between the first inlet and the liquid outlet port.

11. The air exhaust structure for the dry ice preparation according to claim 8 or 9, **characterized in that**, further comprising: an outer wall of the ice preparation cavity comprises a window, the window is filled with low-density materials, and the low-density materials comprise pores.

12. The air exhaust structure for the dry ice preparation according to claim 8 or 9, **characterized in that**: an outer wall of the ice preparation cavity comprises a window, and the window comprises a grid.

13. An air exhaust method for dry ice preparation, in a dry ice preparation device, a liquid outlet passage of carbon dioxide is further in communication with a branch passage in communication with air through an air exhaust valve, **characterized in that**, it comprises the following steps:
1) enabling a liquid outlet port to be in communication with a liquid inlet pipeline, and ejecting liquid carbon dioxide into an ice preparation cavity through the liquid outlet port during ice preparation; and
2) blocking the liquid outlet port from the liquid inlet pipeline, enabling the liquid outlet port to be in communication with external air, and pushing a piston in the cavity to compress solid carbon dioxide to form a shape when the ice preparation is complete.

14. The air exhaust method of the dry ice preparation according to claim 13, **characterized in that**: exhausting gasified carbon dioxide from a window of the cavity during the ice preparation.
